# EUROPEAN PATENT SPECIFICATION

(11) **EP 2 214 528 B1**
(45) Date of publication and mention of the grant of the patent: **17.07.2013**
(21) Application number: 08848851.5
(22) Date of filing: 12.11.2008
(51) Int. Cl.: A47B 21/00

(54) **OPERATOR DESK HAVING SYNCHRONIZED DISPLAYS**
SCHREIBTISCH MIT SYNCHRONISIERTEN ANZEIGEN
PUPITRE DE COMMANDE D'OPÉRATEUR COMPRENANT DES DISPOSITIFS D'AFFICHAGE SYNCHRONISÉS

(30) Priority: 14.11.2007 SE 0702519
(43) Date of publication of application: 11.08.2010
(73) Proprietor: ABB AB, 721 83 Västerås (SE)
(72) Inventor: SCHÄRING, Pierre, S-504 66 Borås (SE)
(74) Representative: Savela, Reino Aleksi
(86) International application number: PCT/SE2008/051293
(87) International publication number: WO 2009/064246

(56) References cited:
- WO-A1-00/21408
- JP-A- 2003 280 558
- US-A- 4 725 106
- US-A- 4 920 458
- US-A- 5 537 127

## Description

### TECHNICAL FIELD

The present invention relates to an operator desk system comprising:
- an operator desk;
- at least two display/monitor stands arranged on the operator desk to carry one display/monitor each.

### BACKGROUND

A good work place for an operator is the prerequisite for creating both efficiency and comfort. During the latest decade computer working places with many displays have been more and more common. The new technique facilitates the supervision and the control of different types of processes, e.g. control rooms, operation and headquarters.

As different people take turns in working at the same workplace, there is a higher demand for flexibility as to adjustments of the operator desks often used for such work as supervision and control.

Today, the applicant markets an operator desk system under the trade name Cergo. This system comprises a front work shelf and a rear shelf intended for displays/monitors, below called display shelf. One or more operators stand or sit in front of the work shelf, and the rear display shelf carries a number of displays. The work shelf and the display shelf may be raised and lowered in relation to the floor and also in relation to each other.

There are also motorized inclination solutions for the displays based on a bar inclinating all displays simultaneously. This functions only on straight table models. Unfortunately, this method offers quite warped angles if one tries to make it on a curved shape of the operator desk, which is the shape mostly sold.

US4725106 discloses a reconfigurable workstation having video, keyboard, and hand operated motion controller capabilities. The workstation includes main side panels between which a primary work panel is pivotally carried in a manner in which primary work panel may be adjusted and set in a negatively declined or positively inclined position for proper forearm support while operating hand controllers. A keyboard table supports a keyboard in such a manner that the keyboard is set in a positively inclined position with respect to the negatively declined work panel. Declined forearm support surfaces are provided on either side of an alcove accommodating a seated operator with forearms of the operator supported in a declined position for proper support and operation of the hand controllers. A visual display unit is inclined with respect to primary work panel so that the operator seated at alcove is properly positioned. With the proper declination of work panel and inclination of keyboard and a visual display unit, keys of keyboard and the screen of visual display units are well within the focal cone of operator. Various adjustable devices are provided for adjusting the relative declinations and inclinations of the work panels, tables, and visual display panels.

### DISCLOSURE OF THE INVENTION

An object of the invention is to provide an operator desk system which makes more independent locations of the displays possible, i.e. so that they need not be arranged on a straight line.

This object is achieved by the operator desk system mentioned in the preamble, wherein each display stand comprises individual, motorized inclining means, which inclining means are arranged to change the inclination of the corresponding display stand in a synchronized motion in relation to each other, independent of the locations of said displays on the operator desk. The operator desk system comprises synchronizing means in order to synchronize the inclining means so that they may change the inclination of the displays in a synchronized motion. This allows the displays to be optionally placed at the same time as their inclination may be changed in a synchronized motion.

Other characterizing features of the operator desk system are:
- that the inclining means comprises a fourth motorized actuator arranged to influence the inclination of an articulated rocker, on which the display is mounted;
- that the number of display stands and displays are at least three, preferably at least four, and that they are arranged along a concave line so that the displays face a central point.

### BRIEF DESCRIPTION OF THE ENCLOSED DRAWINGS

Below, the invention will be described more in detail with reference to preferred embodiments and to the enclosed drawings.
- Fig. 1: shows an operator desk with a number of displays/monitors seen obliquely from the front;
- Fig. 2: shows a pedestal carrying the operator desk;
- Fig. 3: is an explanatory sketch of the operator desk seen from the side, when all actuators are in maximally extended positions;
- Fig. 4: is an explanatory sketch of the operator desk seen from the side, when all actuators are in maximally retracted positions;
- Fig. 5: shows a perspective view of a display seen obliquely from behind;
- Fig. 6: shows a schematic outline of the control system; and
- Figs. 7 and 8: show an operator desk seen from above.

### DETAILED DESCRIPTION OF PREFERRED EMBODIMENTS

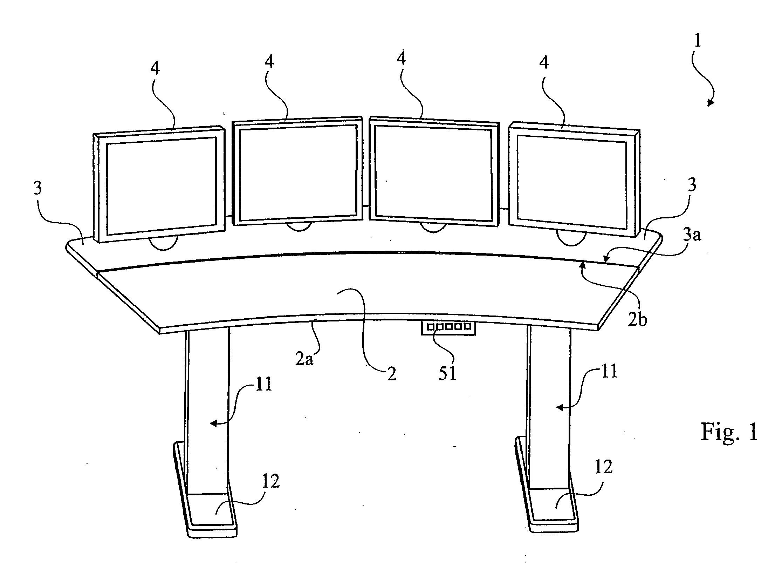

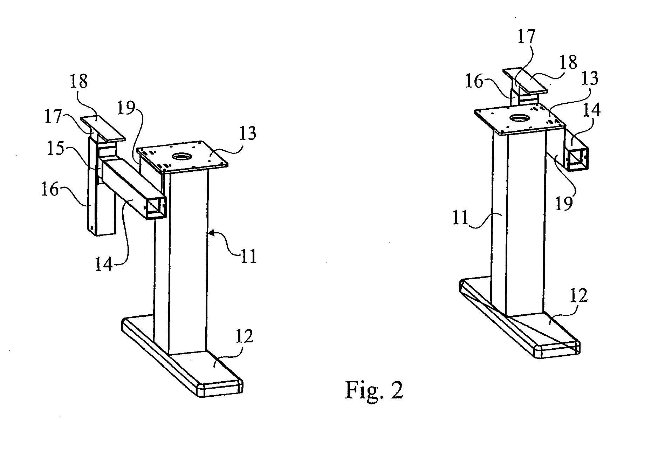

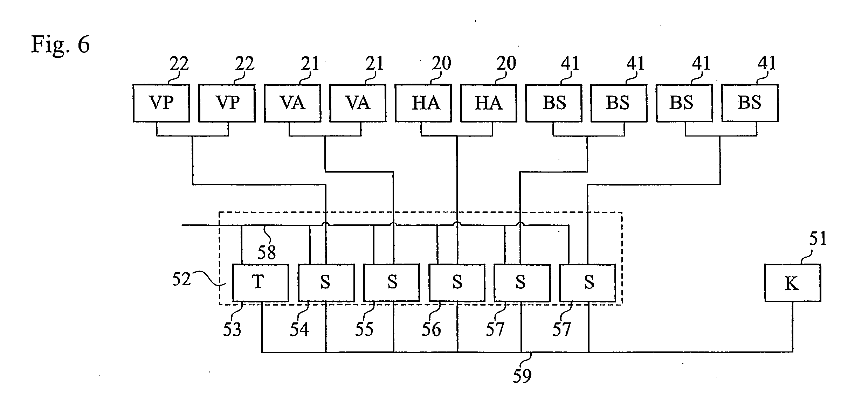

Fig. 1 shows an operator desk 1 comprising a front work shelf 2, a rear shelf 3 intended for displays, below display shelf 3, and two vertical pillars 11 belonging to the pedestal 10, seen in Fig. 2, which carries the operator desk 1. In the example shown the operator desk 1 has a curved oblong shape, wherein the front work shelf 2 has a front concave first long side 2a and a rear convex second long side 2b, at which first long side 2a one or more operator/s will stand or sit. The rear display shelf 3 has a concave third long side 3a matching the second long side 2b. Four displays 4 are arranged on the rear display shelf 3. Further, there is shown a control panel 51 for giving input to the control system 50 of the desk, which is shown in Fig. 6.

The two vertical pillars 11 form legs of the operator desk 1. The respective vertical pillar 11 is telescopically extendable and has a base12 in its lower end for meeting the floor and an attachment plate 13 in its upper end for attachment to the front work shelf 2. A first motorized actuator 22, not shown, but see the control system of Fig. 6, is provided in the respective pillar to make it possible to expand the vertical pillars 11 telescopically, which belongs to prior art and will therefore not be described more specifically. The telescopically extendable vertical pillars together with the first actuators, not shown, are the first vertically adjusting means 11, 22 of the operator desk. These means imply that the height of the front work shelf 2 may be adjusted.

The rear display shelf 3 is connected to the front work shelf 2 via two parallelly arranged horizontal arms 14, 15 having two corresponding vertical arms 16, 17. The respective horizontal arm comprises two parts, a front arm part 14 and a rear arm part 16, which are telescopically displaceable in relation to each other. In the respective horizontal arm 14, 15 a corresponding second motorized actuator 20 is arranged in the form of a adjusting means 20 for the horizontal arms - i.e. totally two adjusting means 20 for the horizontal arms , as there are two horizontal arms 14, 15 - in order to be able to change the position of the front arm part 14 in relation to the rear arm part 15. The respective front arm part 14 is attached to the front work shelf 2 by an attachment plate 19. The respective rear arm part 15 is attached to the corresponding vertical arm 16, 17, in a lower arm part thereof. The telescopically extendable horizontal arm 14, 15 with the second motorized actuator 20 is the horizontally adjusting means 14, 15, 20 of the operator desk. The horizontally adjusting means 14, 15, 20 results in that the rear display shelf 3 may change its horizontal position in relation to the front work shelf 2, in a direction towards and away from the front work shelf 2, which implies that an operator may simply achieve an individually adapted distance to the displays 4.

The respective vertical arm 16, 17 comprises two parts, the lower arm part 16, and an upper arm part 17, which are telescopically displaceable in relation to each other. In the respective vertical arm 16, 17 a corresponding third motorized actuator 21 is provided in the form of adjusting means 21 for the vertical arms - i.e. totally two adjusting means 21 for the vertical arms, as there are two vertical arms 16, 17 - to be able to change the position of the lower arm part 16 in relation to the upper arm part 17. The respective lower arm part 16 is attached to the corresponding rear arm part 15, and the respective upper arm part 17 has a free end 18, to which the rear display shelf 3 is intended to be attached. The telescopically extendable vertical arm 16, 17 with the third motorized actuator 1 is the second vertically adjusting means 16, 17, 21 of the operator desk 1. The second vertically adjusting means 16, 17, 21 result in that the rear display shelf 3 may change its vertical position in relation to the front work shelf 2, which implies that an operator easily may change the height of the displays 4.

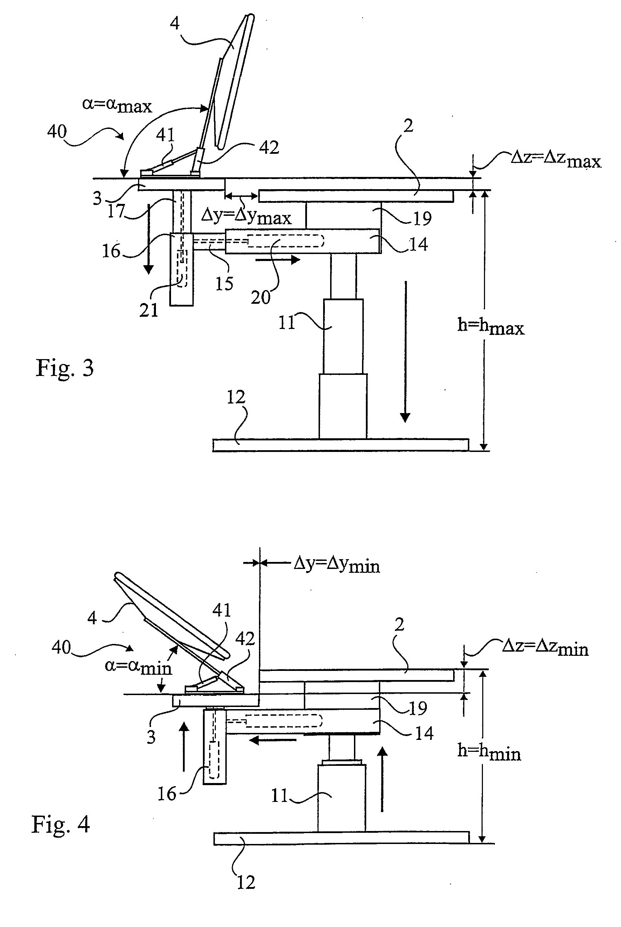

Fig. 3 shows the operator desk 1 in a position in which the respective vertical pillar 11, the horizontal arm 14, 15 and the vertical arm 16, 17 are in its maximal position, i.e. when they are telescopically entirely extended. In this position, the height h of the front work shelf 2 has reached its maximal height hₘₐₓ. The rear display shelf 3 is at maximal distance from the rear work shelf 2 in the horizontal direction Δy = Δyₘₐₓ and maximally vertically above Δz = Δzₘₐₓ. The respective display 4 is carried by a corresponding display stand 40. The respective display stand 40 comprises inclining means 41, 42 in the form of a fourth motorized actuator 41 arranged to influence a corresponding rocker 42, to which the corresponding display 3 is attached. The fourth motorized actuator 41 preferably is a motorized adjusting means, below designated display adjusting means 41. The respective display adjusting means 41 influences the corresponding rocker 42, so that the inclination α of the display 4 may be changed, which is here shown in its maximal position α=αₘₐₓ.

Fig. 4 shows the operator desk 1 in a position in which the respective vertical pillar 11, the horizontal arm 14, 15 and the vertical arm 16, 17 are in its minimal position, i.e. when they are telescopically maximally retracted. In its lowermost end position the rear display shelf 2 is in the vertical direction Δz somewhat below the rear work shelf 2, i.e. Δz=0. In the horizontal direction the rear display shelf 3 starts where the front work shelf 2 ends, i.e. Δy=0. From this position, the rear display shelf 2 may move horizontally away from the front work shelf 2 and vertically upwards from the front work shelf 2 towards the position shown in Fig. 3. Further, as the rear display shelf 3 is connected to the front work shelf 2, the rear display shelf 3 will move vertically when the front work shelf 2 is raised or lowered, i.e. the height of the rear display shelf 3 will be h+ Δz. Of course, the respective telescopic arm/pillar 11, 14, 15, 16, 17 may take positions between the extreme positions.

Even if the lowermost vertical position Δzₘᵢₙ of the rear display shelf 3 in relation to the front work shelf 2 is shown in Fig. 3 to lie below the front work shelf 2, it is, of course, possible to arrange the lowermost position on level with the front work shelf 2 or above it. Equivalently, it is naturally possible to arrange the uppermost position Δzₘₐₓ of the display shelf 3 so that it lies below the front work shelf, on level with the work shelf 2 or as shown in Fig. 4 above the work shelf 2. In one example is Δzmin=-15 cm, i.e. 15 cm below the front work shelf 2, and Δzₘₐₓ = +5 cm. In Fig. 3 the display is shown at its smallest angle of inclination α=αₘᵢₙ, and in Fig. 4 in its maximal angle of inclination α=αₘₐₓ. In one example the angle of inclination α may vary between 45° and 95°, but, of course, also other sizes of the angle of inclination α are quite possible.

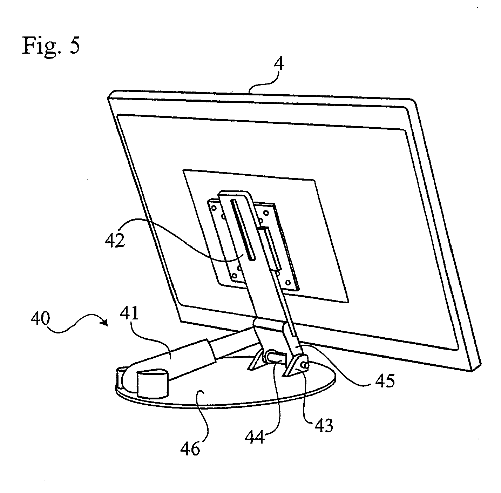

Fig. 5 shows a perspective view of a display 4 attached to a rocker 42, seen oliquely from behind. The rocker 42 is articulated in its lower end 45 by a hinge mounting 43, 44 on a base plate 46 intended to be mounted to the display shelf 3. The display adjusting means 41 are in one end pivotally attached to the base plate 46 and in the other end pivotally mounted to the rocker 42, at a level above the hinge mounting 43, 44. The inclination α of the respective display 4 may thereby be controlled by controlling the respective display adjusting means 41.

Fig. 6 shows a schematic outline of the control system. To control the adjusting means 20, 21, 22, 41 in the two vertical pillars 11, the two horizontal arms 14, 15, the two vertical arms 16, 17 and to the displays 4 a number of control units 54, 55, 56, 57 are used.

A control unit, e.g. an Unjo® control circuit, controls the current for two adjusting means simultaneously, i.e. a first control unit 54 controls a pair of adjusting means 22 in the vertical pillars 11, a second control unit 55 controls the horizontal arm adjusting means 20 for the horizontal arms, a third control unit 56 controls the vertical arm adjusting means 21 in the vertical arms 16, 17, and a fourth and a fifth control unit 57 controls a fourth and a fifth pair of display adjusting means 41 for two pairs of displays 4. Each adjusting means 20, 21, 22, 41 are provided with transmitters for measurement of position and speed, which in the corresponding control unit 54, 55, 56, 57 is used to synchronize the motion for each pair of adjusting means 20, 21, 22, 41. The maximal current of the motors is limited to protect the control units and their motors.

The control units 54, 55, 56, 57 of the system are connected via a first communication link 58, e.g. according to RS-485. Via the communication link 58, an order of motion take place as well as a report of the present position and of other status information is sent. One of the control units 54, 55, 56, 57 is a communication master, for instance the first control unit 54 is a communication master while all other control units 55, 56, 57 are communication slaves. Thus, the communication master 54 is the minimal complement of the system 50; arbitrary combination of the other control units 55, 56, 57 with associated pairs of adjusting means 21, 20, 41 may then be added up to maximal complement. The communication master 54 is also responsible for the synchronization between the different motions of the operator desk 1, possible limitations of the motions and for identification of which other units of the system 50 are connected when the operator desk 1 is provided with voltage. A control panel 51 communicates with the control units 54, 55, 56, 57 via a second communication link 59, for example according to RS232. The control panel 51 can also be replaced by a computer. A transformer 53 supplies current to the system 50. The transformer 53 and the control units 54, 55, 56, 57 are arranged in a control box 52, which may for instance be mounted under the desk.

The motors of the adjusting means 20, 21, 22, 41 are current controlled, wherein maximal momentary current is limited. The limitation also varies during time in order to permit high momentary currents at the same time as overload of the motors (through heating) is prevented. The current control implies continuous linear adjustment of the moment of the motors. Through feedback from the pulse transmitter, not shown, on the motor axes of the motors, the speed and position of the motors are further continuously adj usted.

Each control unit 54, 55, 56, 57 is provided with an initiation entrance and initiation exit as well as an entrance defining the unit as a communication master 54, and a communication slave 55, 56, 57, respectively. In a passive position the initiation exit is in an inactive position. The control units 54, 55, 56, 57 of the system 50 are connected in an initiation chain, wherein a initiation exit of one unit is connected with the initiation entrance of the next unit (daisy-chain). The communication master 54 always is the first unit, and then the initiation entrance is ignored. When the system 50 is initiated, the communication master 54 puts its initiation exit active, wherein the next unit 55, 56, 57 is put into an addressing position. The communication master 54 allocates the unit 55, 56, 57 a communication address, wherein the units 55, 56, 57 change to an addressed position, which activates the initiation exit of the unit 55, 56, 57. The process is repeated with the subsequent units 55, 56, 57 until all control units 55, 56, 57 are addressed.

The communication of the system 50 is then entirely activated, and each control unit 55, 56, 57 is identified according to its position in the cabling of the system. This implies that at a replacement of a control unit 55, 56, 57, the new control unit 55, 56, 57 will get the same system function without programming or parameter settings.

Each control unit 54, 55, 56, 57 drives a pair of adjusting means 22, 21, 20, 41, wherein the synchronization within the pair takes place internally in the control unit 54, 55, 56, 57. The positions of the adjusting means 22, 21, 20, 41 are then coordinated so that the maximal deviation at normal operation never exceeds some single number of steps of the pulse transmitter. At extreme situations, for instance if one adjusting means is stopped by an inelastic outer hindrance, the deviation will not exceed some ten steps of the pulse transmitter. The deviation is also known, and therefore a correct synchronization is automatically regained when a normal operation is resumed.

Normally, no motion synchronization is performed between the pair of adjusting means 22, 21, 20 which control the motions (h, Δz, Δy) of the desk 1. However, the control units 57 of the displays may synchronize the pair of adjusting means 41 of the displays with each other, so that, if one wants to change the angle α of inclination for all displays, this may be performed with synchronization. Preferably, the motions in relation to each other are pre-adjusted, so that a movement of the work shelf 3 upwards (h) prevents all other motions (Δz, Δy, α) in order to minimize the size of the transformer 53. In one embodiment, the control units 54, 55, 56, 57 may be programmed such that forbidden areas may be initiated, which for instance may imply that maximal desk height hₘₐₓ of the work shelf 2 and maximal height Δzₘₐₓ of the display cannot be achieved simultaneously because of a mechanical hindrance above the displays 4.

At start of voltage supply the position of the adjusting means 20, 21, 22, 41 is unknown, and therefore an initiation motion towards a detectable position (home position) is made. The initiation motion may be performed at a reduced speed and a reduced moment. The home position is suitably arranged as a digital position transmitter, (micro switch, inductive transmitter, optic transmitter or the like), not shown in the figures, for each adjusting means 20, 21, 22, 41 with the output signal in the one position, when the position is between the first end position and the home position while the output signal is in the other position within the balance of the motion area. Minimal initiation motion is obtained when the home position is placed in a position with the smallest average distances to the positions which are statistically most common at operation of the operator desk 1.

When the digital position transmitter has indicated a change, the position measurement is absolutely defined. The permitted motion area is defined by adjustable parameters stored in the control unit 54, 55, 56, 57. A pair of adjusting means 20, 21, 22, 41 which for some reason has been put out of the synchronized position will at the initiation be treated in two different ways depending on the signals from the digital position transmitters:
- If for a pair of adjusting means 20, 21, 22, 41 both digital position transmitters give the same output signals, the adjusting means 20, 21, 22, 41 are first moved with a maintained synchronization error. When the first adjusting means reaches the home position it will be stopped, while the second adjusting means continues to its home position, wherein the motion is also synchronized.
- If the digital position transmitters give different output signals, the respective adjusting means of the pair of adjusting means 20, 21, 22, 41 will be moved in different directions and stopped when the respective home position is reached, wherein the synchronization error is continuously reduced until synchronization is achieved.

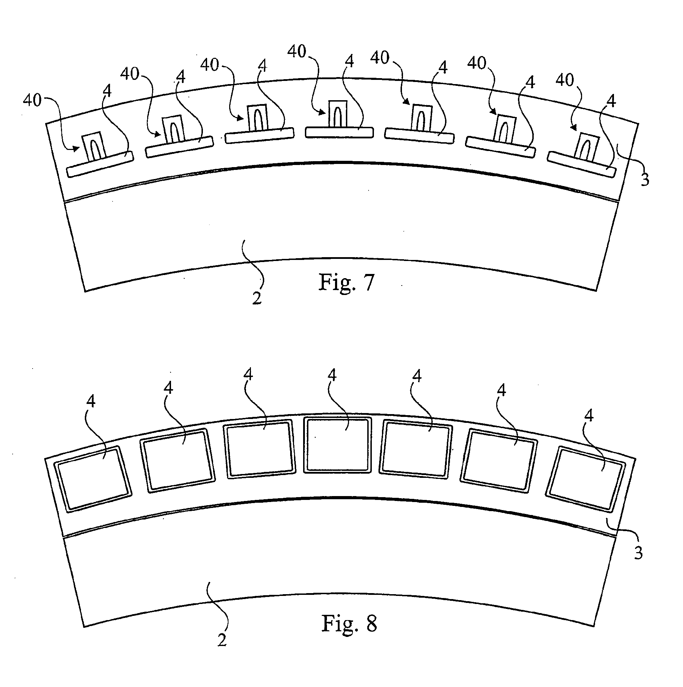

Figs. 7 and 8 show an operator desk seen obliquely from above with six displays 4. In Fig. 7 the displays 7 are upright as in Fig. 3, and in Fig. 8 the displays are inclined backwards as the display 5 in Fig. 4. From the position in Fig. 7 the displays 4 may change their angles of inclination to the position of Fig. 8 in a synchronized motion thanks to the control system 50. Further, it is understood that this may be achieved despite the displays 4 are not aligned but stand at a concave line.

The invention has above been described according to its preferred embodiment. However, it should be understood that the invention is not limited only to this embodiment but may be varied within the scope defined by the claims.

## Claims

1. An operator desk system comprising:
- an operator desk (1);
- at least two display/monitor stands (40) arranged on an operator desk (1) in order to carry one display/monitor (4) each,
**characterised in that** each display stand (40) comprises individual motorized inclining means (41, 42), said inclining means being arranged to change the inclination (α) of the corresponding display stand (40) in a synchronized motion in relation to each other, independent of the location of said displays on the operator desk (1), wherein the operator desk system comprises synchronization means (57) for performing said synchronization of the inclining means (41, 42), so that they may change the inclination (a) of the displays in a synchronized motion.

2. An operator desk system according to claim 1, **characterised in that** the inclining means comprise a motorized actuator (42) arranged to influence the inclination (α) on an articulated rocker (42) on which the display (4) is mounted.

3. An operator desk system according to any of claims 1 or 2, **characterised in that** the number of display stands and displays are at least three, preferably at least four, and that they are arranged along a concave line so that the displays face a central point.

4. An operator desk system according to any of claims 1 to 3, **characterised in that** the operator desk (1) comprises:
- a front work shelf (2) intended as a work surface for one or more operators, said work shelf (2) having an oblong extension with a front long side (2a) and a rear long side (2b);
- a rear support structure (3, 40) including the display stands (40) for carrying the displays (4), said rear support structure (3) being arranged behind the work shelf, so that an operator placed at the front long side (2a) of the work shelf (2) has the work shelf (2) between himself and the rear support structure (3, 40); and
- a pedestal (10) carrying the work shelf (2) and the support structure (3, 40) from a ground such as a floor.

5. An operator desk system according to claim 4, **characterised in that** the pedestal (10) comprises motorized horizontally adjusting means (14, 15,20) to adjust the position of the support structure (3, 40) horizontally (Δy) in a direction towards and away from the work shelf (2).

6. An operator desk system according to any of claims 4 or 5, **characterised in that** the pedestal (10) comprises motorized first vertically adjusting means (11, 22) to vertically adjust the height (h) of at least the front desk shelf (2).

7. An operator desk system according to any of claims 4 to 6, **characterised in that** the pedestal (10) comprises second vertically adjusting means (16, 17, 21) to adjust the height (Δz) of the support structure (3) in relation to the work shelf (2).

8. An operator desk system according to any of claims 4 to 7, **characterised in that** the support structure 3, 40 is a rear flat shelf (3), on which the display stands (4) are arranged.

9. An operator desk system according to any of claims 1 to 8, **characterised in that** it comprises a control system (50) including at least one control unit (54, 55, 20 56, 57) to control the motorized means (20, 21, 22, 41) with the operator desk (1) and one control panel (51) to give input to the control unit (54, 55, 56, 57).

## Patentansprüche

1. Bedientischsystem, aufweisend:
- einen Bedientisch (1);
- mindestens zwei Bildschirm-/Monitorständer (40), die auf einem Bedientisch (1) angeordnet sind, um jeweils einen Bildschirm/Monitor (4) zu tragen,
**dadurch gekennzeichnet, dass** jeder Bildschirmständer (40) individuelle motorisierte Neigungsmittel (41, 42) umfasst, wobei die Neigungsmittel so ausgelegt sind, dass sie die Neigung (α) des entsprechenden Bildschirmständers (40) in einer synchronisierten Bewegung in Bezug aufeinander unabhängig von der Position der Bildschirme auf dem Bedientisch (1) ändern, wobei das Bedientischsystem Synchronisationsmittel (57) zum Durchführen der Synchronisation der Neigungsmittel (41, 42) umfasst, so dass sie die Neigung (α) der Bildschirme in einer synchronisierten Bewegung ändern können.

2. Bedientischsystem nach Anspruch 1, **dadurch gekennzeichnet, dass** die Neigungsmittel ein motorisiertes Stellglied (42) umfassen, dass so ausgelegt ist, dass es die Neigung (α) auf einem gelenkigen Kipphebel (42) beeinflusst, auf welchem der Bildschirm (4) montiert ist.

3. Bedientischsystem nach einem der Ansprüche 1 oder 2, **dadurch gekennzeichnet, dass** die Anzahl von Bildschirmständern und Bildschirmen mindestens drei und vorzugsweise mindestens vier beträgt, und dass sie entlang einer konkaven Linie angeordnet sind, so dass die Bildschirme einem Mittelpunkt gegenüberliegen.

4. Bedientisch nach einem der Ansprüche 1 bis 3, **dadurch gekennzeichnet, dass** der Bedientisch (1) umfasst:
- eine vordere Arbeitsplatte (2), die als Arbeitsfläche für einen oder mehr Bediener vorgesehen ist, wobei die Arbeitsplatte (2) eine längliche Ausdehnung mit einer vorderen langen Seite (2a) und einer hinteren langen Seite (2b) aufweist;
- eine hintere Tragstruktur (3, 40), welche die Bildschirmständer (40) zum Tragen der Bildschirme (4) umfasst, wobei die hintere Tragstruktur (3) so hinter der Arbeitsplatte angeordnet ist, dass ein Bediener, der an der vorderen langen Seite (2a) der Arbeitsplatte (2) steht, die Arbeitsplatte (2) zwischen ihm selbst und der hinteren Tragstruktur (3, 40) hat; und
- einen Standfuß (10), der die Arbeitsplatte (2) und die Tragstruktur (3, 40) von einem Grund, wie beispielsweise einem Boden, trägt.

5. Bedientischsystem nach Anspruch 4, **dadurch gekennzeichnet, dass** der Standfuß (10) motorisierte Horizontalverstellungsmittel (14, 15, 20) umfasst, um die Position der Tragstruktur (3, 40) horizontal (Δy) in einer Richtung zur Arbeitsplatte (2) hin und davon weg zu verstellen.

6. Bediensystem nach einem der Ansprüche 4 oder 5, **dadurch gekennzeichnet, dass** der Standfuß (10) erste motorisierte Vertikalverstellungsmittel (11, 22) umfasst, um die Höhe (h) wenigstens der vorderen Arbeitsplatte (2) vertikal zu verstellen.

7. Bediensystem nach einem der Ansprüche 4 bis 6, **dadurch gekennzeichnet, dass** der Standfuß (10) zweite motorisierte Vertikalverstellungsmittel (16, 17, 21) umfasst, um die Höhe (Δz) der Tragstruktur (3) in Bezug auf die Arbeitsplatte (2) vertikal zu verstellen.

8. Bediensystem nach einem der Ansprüche 4 bis 7, **dadurch gekennzeichnet, dass** die Tragstruktur (3, 40) eine hintere, flache Platte (3) ist, auf welcher die Bildschirmständer (4) angeordnet sind.

9. Bediensystem nach einem der Ansprüche 1 bis 8, **dadurch gekennzeichnet, dass** es ein Steuersystem (50) umfasst, das mindestens eine Steuereinheit (54, 55, 56, 57) zum Steuern der motorisierten Mittel (20, 21, 22, 41) mit dem Bedientisch (1) und einem Steuerpult (51) umfasst, um Eingaben in die Steuereinheit (54, 55, 56, 57) vorzunehmen.

## Revendications

1. Système de pupitre d'opérateur, comprenant :
- un pupitre (1) d'opérateur ;
- au moins deux supports (40) de dispositif d'affichage/contrôle disposés sur un pupitre (1) d'opérateur, afin de porter chacun un dispositif (4) d'affichage/contrôle,
**caractérisé en ce que** chaque support (40) de dispositif d'affichage comprend des moyens (41, 42) individuels motorisés d'inclinaison, les moyens d'inclinaison étant agencés pour modifier l'inclinaison (α) du support (40) correspondant de dispositif d'affichage suivant un mouvement synchronisé l'un avec l'autre indépendamment de l'emplacement des dispositifs d'affichage sur le pupitre (1) d'opérateur, le système de pupitre d'opérateur comprenant des moyens (57) de synchronisation pour effectuer la synchronisation des moyens (41, 42) d'inclinaison, de manière à ce qu'ils puissent modifier l'inclinaison (α) des dispositifs d'affichage suivant un mouvement synchronisé.

2. Système de pupitre d'opérateur suivant la revendication 1, **caractérisé en ce que** les moyens d'inclinaison comprennent un actionneur (42) motorisé, agencé pour influencer l'inclinaison (α) sur un levier (42) articulé, sur lequel le dispositif (4) d'affichage est monté.

3. Système de pupitre d'opérateur suivant l'une quelconque des revendications 1 ou 2, **caractérisé en ce que** le nombre des supports de dispositif d'affichage et de dispositifs d'affichage est au moins de trois, de préférence d'au moins quatre, et **en ce qu'**ils sont disposés le long d'une ligne concave, de manière à ce que les dispositifs d'affichage fassent face à un point central.

4. Système de pupitre d'opérateur suivant l'une quelconque des revendications 1 à 3, **caractérisé en ce que** le pupitre (1) d'opérateur comprend :
- une tablette (2) de travail avant conçue comme surface de travail pour un opérateur ou pour plusieurs opérateurs, la tablette (2) de travail ayant une étendue oblongue en ayant un grand côté (2a) avant et un grand côté (2b) arrière ;
- une structure (3, 40) arrière de support comportant les supports (40) de dispositif d'affichage pour porter les dispositifs (4) d'affichage, la structure (3) arrière de support étant disposée derrière la tablette de travail, de sorte qu'un opérateur placé sur le grand côté (2a) avant de la tablette (2) de travail a la tablette (2) de travail entre lui et la structure (3, 40) arrière de support ; et
- un piédestal (10) portant la tablette (2) de travail et la structure (3, 40) de support à partir d'un sol, tel qu'un plancher.

5. Système de pupitre d'opérateur suivant la revendication 4, **caractérisé en ce que** le piédestal (10) comprend des moyens (14, 15, 20) motorisés d'ajustement horizontalement pour ajuster la position de la structure (3, 40) de support horizontalement (Δy) dans une direction allant vers la tablette (2) de travail et s'en éloignant.

6. Système de pupitre d'opérateur suivant l'une quelconque des revendications 4 ou 5, **caractérisé en ce que** le piédestal (10) comprend des premiers moyens (11, 22) motorisés d'ajustement verticalement pour ajuster verticalement la hauteur (h) d'au moins la tablette (2) avant du pupitre.

7. Système de pupitre d'opérateur suivant l'une quelconque des revendications 4 à 6, **caractérisé en ce que** le piédestal (10) comprend des deuxièmes moyens (16, 17, 21) d'ajustement verticalement pour ajuster la hauteur (Δz) de la structure (3) de support par rapport à la tablette (2) de travail.

8. Système de pupitre d'opérateur suivant l'une quelconque des revendications 4 à 7, **caractérisé en ce que** la structure (3, 40) de support est une tablette (3) arrière plate, sur laquelle sont disposés les supports (4) des dispositifs d'affichage.

9. Système de pupitre d'opérateur suivant l'une quelconque des revendications 1 à 8, **caractérisé en ce qu'**il comprend un système (50) de commande, comprenant au moins une unité (54, 55, 20 56, 57) de commande pour commander les moyens (20, 21, 22, 41) motorisés avec le pupitre (1) d'opérateur et un panneau (51) de commande pour donner une donnée d'entrée à l'unité (54, 55, 56, 57) de commande.
